(19) Europäisches Patentamt
European Patent Office
Office européen des brevets

(11) EP 3 363 285 A2

(12) **EUROPEAN PATENT APPLICATION**

(43) Date of publication:
22.08.2018 Bulletin 2018/34

(51) Int Cl.:
A01K 31/16 (2006.01)    A01K 43/00 (2006.01)

(21) Application number: 17203138.7

(22) Date of filing: 22.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 27.01.2017  JP 2017013400

(71) Applicant: Nabel Co., Ltd.
Kyoto-shi
Kyoto 601-8444 (JP)

(72) Inventor: NAMBU, Takahiko
Kyoto-shi, Kyoto 601-8444 (JP)

(74) Representative: Prüfer & Partner mbB
Patentanwälte · Rechtsanwälte
Sohnckestraße 12
81479 München (DE)

(54) **INDIVIDUAL INFORMATION DETERMINATION SYSTEM FOR EGGS AND EGG CONTENT LEAK-OUT DETECTION APPARATUS USING THE SYSTEM**

(57)    An individual information determination system for eggs (E) includes: an orientation determination unit (11) which determines a position which a temporary container (A) having a plurality of holes (a) with eggs (E) accommodated therein assumes as it is transported on a temporary container transporting unit (40); and an individual information storage unit (12) which manages individual information of eggs (E) associated with the holes (a), respectively, based on the position of the temporary container (A) transported that is determined by the orientation determination unit (11).

FIG.1

**Description**

BACKGROUND OF THE INVENTION

Field of the Invention

The present invention relates to a system in which after eggs are graded by weight or the like before the eggs are transferred to a pack or a similar packing container, individual information of such eggs placed in a temporary container which accommodates the eggs therein is managed, and an egg content leak-out detection apparatus using a system which determines the eggs' individual information.

Description of the Background Art

Eggs laid in a henhouse undergo a variety of detections and packed at a location called a GP (grading and packing) center. In recent years, as producing a variety of types of products in small amounts is increasingly accelerated, a variety of types of traceability systems have been proposed in response to a demand of consumers who desire to know production histories of eggs packed for sale. As an example thereof, Japanese Patent Laying-Open No. 2004-344040 discloses a management system which obtains information of a layer breeding house based on history information printed on individual chicken eggs. This management system prints information directly on individual chicken eggs or a label applied thereon, which limits the amount of the information and also requires a cost for ink and the like.

Accordingly, the Applicant has considered a method of processing while transferring temporary containers (or trays) such that they constantly have a fixed orientation without printing individual pieces of information on eggs (for example, see Japanese Patent No. 4431828). In this method, an order is kept so that an egg earlier placed in the temporary container is always located downstream in the transporting direction, and traceability is established by reproducing the order in the packing stage.

SUMMARY OF THE INVENTION

In recent years, however, GP centers are increasingly increased in size, and grading and packing are also increasingly often done in different time zones or days or different places. In such a case, it is extremely cumbersome to deliver temporary containers to a next process while keeping the temporary containers to constantly have a fixed orientation, and accordingly, some approach is required.

Accordingly, a main object of the present invention is to provide an individual information determination system for eggs that can grade and pack eggs without considering a temporary container's orientation.

Further, as eggs' individual information as aforementioned is easily managed, a novel detection apparatus can also be provided. Specifically, it is a so-called content leak-out detection apparatus for an egg having its contents having leaked out thereof, i.e., some of eggs packed as a final product which has broken and has its contents having leaked out thereof and has its shell left alone. While such conventionally known content leak-out detection apparatuses are indicated for example in Japanese Patent Nos. 5899533 and 5896840, the present invention contemplates a novel content leak-out detection apparatus replacing them.

In order to achieve the above object, the present invention takes the following approach: More specifically, an individual information determination system for eggs according to the present invention comprises: an orientation determination unit that determines a position which a temporary container having a plurality of holes with eggs accommodated therein assumes as it is transported on a temporary container transporting unit; and an individual information storage unit that manages individual information of eggs associated with the holes, respectively, based on the position of the temporary container transported that is determined by the orientation determination unit.

Furthermore, more preferably, the present system further comprises an information acquisition unit which acquires, based on ID information read at any one of a radio frequency identification (RFID) tag and a bar code provided to the temporary container, individual information of eggs corresponding thereto from the individual information storage unit.

Preferably, the individual information storage unit is provided to the RFID tag provided to the temporary container and any one of an information providing unit that writes to the RFID tag provided to the temporary container the individual information of the eggs associated with the holes, respectively, and an information reading unit that reads the individual information of the eggs from the RFID tag, is comprised.

Preferably, the temporary container transporting unit is connected to a temporary storage unit for temporarily storing the temporary container, and the temporary container is stacked above another identically shaped temporary container such that it is rotated by 90 degrees in the horizontal direction and the temporary containers are thus stored in the temporary storage unit.

Preferably, the orientation determination unit includes a unit provided to the temporary container to be sensed, and a sensing unit provided to the temporary container transporting unit to sense the unit to be sensed.

Preferably, the sensing unit is disposed on opposite sides with the temporary container transporting unit interposed, and, based on on which side of the temporary container transporting unit the sensing unit having sensed the unit to be sensed is, the orientation determination unit determines the position of the temporary container on the temporary container transporting unit.

Preferably the sensing unit is an antenna, and preferably it can read the RFID tag provided to the temporary container.

Furthermore, more preferably, the individual information determination system for eggs comprises a packing control device which controls, based on the individual information of the eggs, packing related equipment provided at the packing container transporting unit transporting a predetermined packing container to which eggs have been transferred from the temporary container. The individual information of the eggs is any one of individual information of eggs read by the information reading unit and individual information of eggs obtained by the information acquisition unit.

Preferably, the packing related equipment is at least one of: a container supply unit which supplies the predetermined packing container to the packing container transporting unit; a transfer unit which transfers eggs from the temporary container to the predetermined packing container; a product information providing unit which provides the predetermined packing container with any one of individual information of eggs transferred to the predetermined packing container and information associated therewith; a label shooter unit which introduces a label into the predetermined packing container; a labeler unit which sticks a label to an external side of the predetermined packing container; and a label sealer unit which sticks a seal to individual eggs in the predetermined packing container.

Another individual information determination system for eggs according to the present invention comprises: an individual information storage unit which manages individual information of eggs associated with a plurality of holes, respectively, provided to a temporary container to accommodate eggs therein; an information acquisition unit which acquires, based on ID information read at an RFID tag or a bar code provided to the temporary container, individual information of eggs corresponding thereto from the individual information storage unit; and a packing control device which controls, based on the individual information of the eggs that is acquired by the information acquisition unit, packing related equipment provided at a packing container transporting unit transporting a predetermined packing container to which eggs have been transferred from the temporary container.

Still another individual information determination system for eggs according to the present invention comprises: an information reading unit which reads from an RFID tag provided to a temporary container individual information of eggs associated with a plurality of holes, respectively, provided to the temporary container to accommodate eggs therein; and a packing control device which controls, based on the individual information of the eggs that is read by the information reading unit, packing related equipment provided at a packing container transporting unit transporting a predetermined packing container to which eggs have been transferred from the temporary container.

According to the present invention, an egg content leak-out detection apparatus employs the above described individual information determination system for eggs to detect whether an egg accommodated in a packing container has its contents having leaked out thereof, and it comprises: a weight-at-grading-time data receiving unit which receives from the packing control device data on weight at a time of grading that extracts weights of eggs accommodated in a specific packing container, based on individual information of the eggs; a post-packing weight data receiving unit which receives from a weight measuring unit provided to a packing container transporting unit data on a post-packing weight measured in a state in which eggs are accommodated in the specific packing container; and a content leak-out determination unit which determines whether there is any egg accommodated with its contents having leaked out thereof by using a weight in a packed state obtained from the data on the post-packing weight, a weight at a time of grading obtained from the data on the weight at the time of grading, and a weight of the specific packing container in an empty state. The individual information of the eggs is any one of individual information of eggs read by the information reading unit and individual information of eggs obtained by the information acquisition unit.

ADVANTAGEOUS EFFECTS OF INVENTION

The present invention can thus provide an individual information determination system for eggs that can grade and pack eggs without considering a temporary container's orientation. Furthermore, the present invention can provide a novel type of content leak-out detection apparatus using individual information of eggs.

The foregoing and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a schematic plan view showing an egg grading and packing apparatus according to a first embodiment of the present invention.

FIG. 2 is a conceptual plan view showing a main part of the egg grading and packing apparatus according to the same embodiment.

FIG. 3 is a conceptual diagram showing an individual information determination system for eggs according to the embodiment.

FIG. 4 is a conceptual diagram showing the individual information determination system for eggs according to the embodiment.

FIG. 5 is a schematic view showing a temporary container having eggs contained therein according to the same embodiment.

FIG. 6 is a schematic plan view showing an egg grading and packing apparatus according to a second embodiment of the present invention.

FIG. 7 is a schematic plan view showing an egg grading and packing apparatus according to a third embodiment of the present invention.

FIG. 8 is a conceptual plan view showing a main part of the egg grading and packing apparatus according to the same embodiment.

FIG. 9 is a schematic plan view showing an egg grading and packing apparatus according to a fourth embodiment of the present invention.

FIG. 10 is a schematic plan view showing an egg grading and packing apparatus according to a fifth embodiment of the present invention.

FIG. 11 is a schematic plan view showing an egg grading and packing apparatus according to a sixth embodiment of the present invention.

FIG. 12 is a schematic plan view showing an egg grading and packing apparatus according to a seventh embodiment of the present invention.

DESCRIPTION OF THE PREFERRED EMBODIMENTS

<First Embodiment>

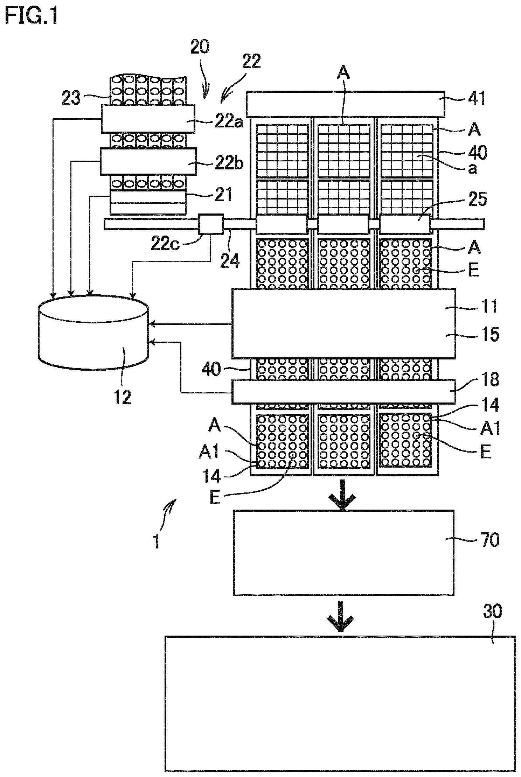

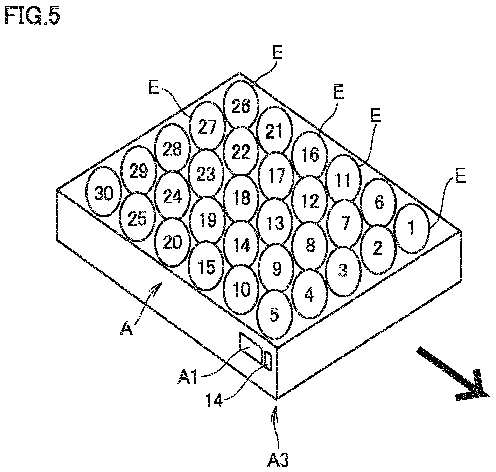

Hereinafter, a first embodiment of the present invention will be described using FIG. 1 to FIG. 5.

An individual information determination system 1 for eggs according to the present embodiment is used when eggs E graded by an egg grading and packing apparatus 20 and placed in a temporary container A are temporarily stored in an automated storage 30.

As shown in FIG. 1, egg grading and packing apparatus 20 is a conventionally well-known apparatus performing a variety of processes while transporting eggs E delivered from a henhouse, and comprises a weight measurement device 21 which measures the weight of an egg, and a variety of detection devices 22. Specifically, egg grading and packing apparatus 20 of the present embodiment includes a first transporting device 23, a detection device 22 provided on first transporting device 23, a weight measurement device 21, a second transporting device 24, and a detection device 22 provided on second transporting device 24. First transporting device 23 transports eggs E in six rows. Detection device 22 provided on first transporting device 23 includes a dirt detector 22a which detects dirt of an egg, a crack detector 22b which detects a crack of an egg, and the like for example. Weight measurement device 21 is provided at a terminal of first transporting device 23. Second transporting device 24 transports eggs E that are transferred from first transporting device 23 in one row. Detection device 22 provided on second transporting device 24 includes, for example, an abnormal egg detection device 22c which detects impurity such as blood inside an egg. Grading and packing apparatus 20 also comprises a grading and collecting unit 25 which collects eggs E that are transported by second transporting device 24 by size.

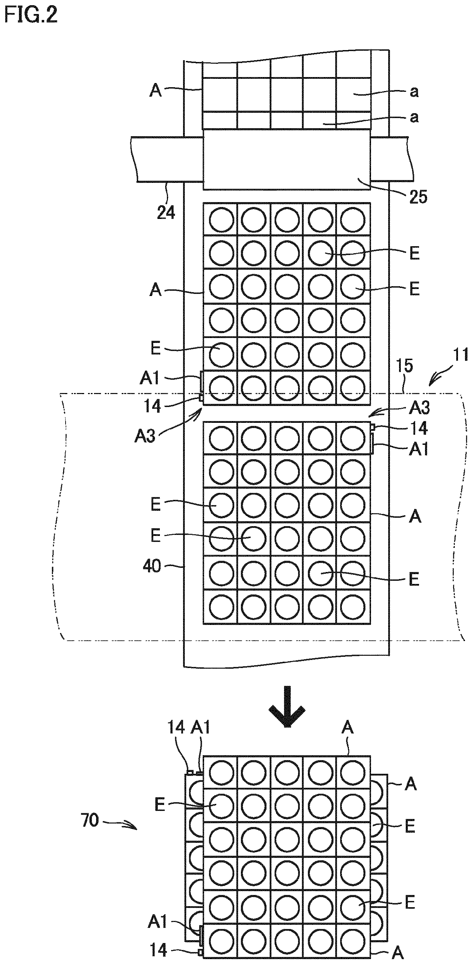

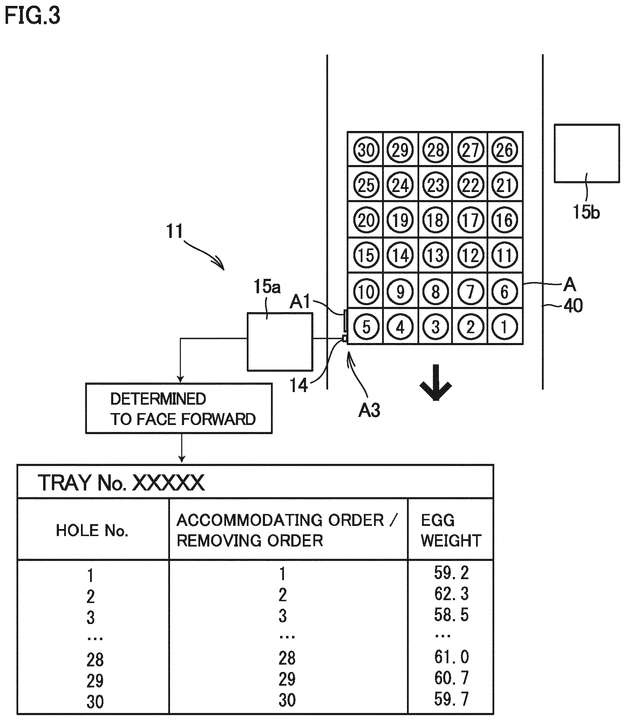

As shown in FIGS. 1 and 2, grading and collecting unit 25 places each egg in a hole a of temporary container A in one of collecting sections for different sizes. For example, in a collecting section for an M size (58 g or more and less than 61 g), eggs E graded and released by a grading and releasing unit (not shown) firstly to fifthly are introduced into holes a of temporary container A (in an order of hole Nos.1→2→3→4 →5 (see FIG. 3)). Once temporary container A has had holes a filled by one row, temporary container A is cycle-conveyed by one row of holes a, and the next row of holes a (having hole nos. 6 to 10 (see FIG. 3)) is positioned immediately under the grading and releasing unit. And eggs E graded by the grading and releasing unit sixthly to tenthly are successively introduced into holes a of temporary container A (in an order of hole nos. 6→7→8→9→10 (see FIG. 3)). A similar operation is repeated.

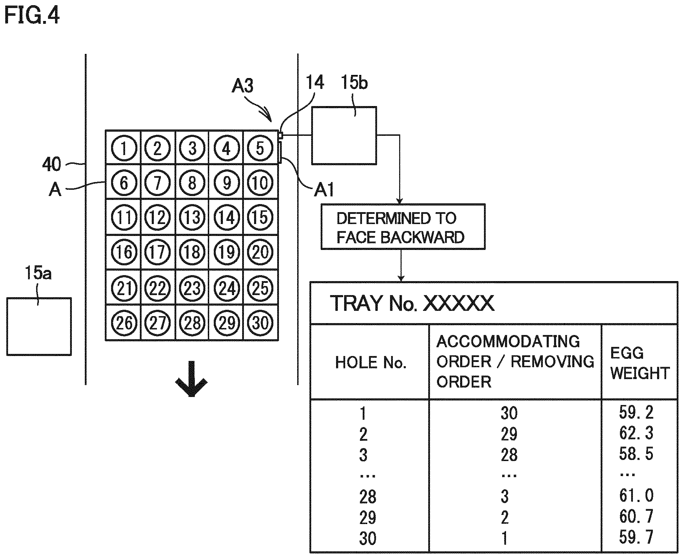

Eggs E graded by the grading and releasing unit 26thly to 30thly are successively introduced into holes a of temporary container A (in an order of hole nos. 26→27→28→29→30 (see FIG. 3)) and filling temporary container A with eggs E is thus completed. The grading and releasing unit can be implemented by a variety of conventionally known such units. In FIGS. 3 to 5, hole numbers (numbers unique to holes, respectively) are imparted to eggs. In the present embodiment, for an order in which eggs are accommodated in holes and an order in which eggs are removed from the holes, there are a case corresponding to an ascending order of hole numbers (i.e., a case in which eggs are accommodated/removed in the order of hole nos. 1 to 30, as shown in FIG. 3) and a case corresponding to a descending order of hole numbers (i.e., a case in which eggs are accommodated/removed in the order of hole nos. 30 to 1, as shown in FIG. 4).

As shown in FIGS. 1 to 5, temporary container A is a tray having a plurality of holes a for temporarily storing eggs E. In the present embodiment temporary container A is made of plastic and can be stacked above another identically shaped temporary container A such that it is rotated by 90 degrees in the horizontal direction. Temporary container A has a rectangular shape in a plan view with holes a in N columns x (N + 1) rows, and specifically has 5 columns x 6 rows for a total of 30 holes a disposed in a single plane. Temporary container A is provided with an RFID tag A1.

As shown in FIGS. 2 to 5, RFID tag A1 is an example of an information recording medium on which information for each egg E placed on hole a of temporary container A can be read and written. In the present embodiment, RFID tag A1 allows contactless communication and has unique ID information (for example, a tray number or the like). In the present embodiment, RFID tag A1 is provided on one side surface of temporary container A, more specifically in a vicinity of a corner A3 of temporary container A. After eggs' individual information is recorded in association with the ID information of RFID tag A1, a predetermined number of temporary containers A are stacked by a stacking device 70, and thereafter temporarily stored in automated storage 30. Stacking device 70 can be implemented by a variety of types of such devices well known in the field of art.

As shown in FIG. 1, automated storage 30 is a temporary storage unit for temporarily storing temporary container A, and it accommodates stacked temporary containers A in a predetermined accommodating section. In the present embodiment, automated storage 30 includes a pair of article storage racks, a stacker crane provided between these article storage racks, a storage station provided to one article storage rack, and a retrieval station provided to the other article storage rack. Automated storage 30 has the storage station connected to a plurality of transporting units 40 corresponding to a plurality of sizes of grading and collecting unit 25.

As shown in FIG. 1, individual information determination system 1 for eggs according to the present embodiment includes an orientation determination unit 11 and an individual information storage unit 12. Orientation determination unit 11 determines a position which temporary container A having a plurality of holes a with eggs E accommodated therein assumes as it is transported on temporary container transporting unit 40. Based on the position of temporary container A transported that is determined by orientation determination unit 11, individual information storage unit 12 manages individual information of eggs associated with holes a, respectively.

As shown in FIGS. 1 to 4, orientation determination unit 11 includes a unit to be sensed 14 provided to temporary container A, and a sensing unit 15 provided to temporary container transporting unit 40 to sense unit to be sensed 14. In the present embodiment, unit to be sensed 14 is a piece of metal attached to one side surface of temporary container A. In the present embodiment, sensing unit 15 is capable of sensing unit to be sensed 14 contactlessly, and it is for example a proximity sensor capable of sensing a piece of metal. Sensing unit 15 is disposed on opposite sides with temporary container transporting unit 40 interposed, and, based on on which side of temporary container transporting unit 40 sensing unit 15 having sensed unit to be sensed 14 is, orientation determination unit 11 of the present embodiment determines the position of the temporary container on temporary container transporting unit 40.

Sensing units 15 are provided at positions which do not face each other with temporary container transporting unit 40 interposed, more specifically, sensing units 15 are provided to correspond to corners A3 of temporary container A existing at point symmetrical positions. One sensing unit 15a is disposed downstream of the other sensing unit 15b by a lengthwise dimension of temporary container A as seen in a direction in which it is transported. In the present embodiment, temporary container A is transported on temporary container transporting unit 40 such that temporary container A has a side with five columns side by side as a leading side (i.e., a downstream side). In the present embodiment, orientation determination unit 11 determines which one of two patterns the side with the five columns side by side as the leading side has.

As shown in FIG. 1, individual information storage unit 12 is a database which stores individual information of eggs on holes a. Each individual egg E on a single temporary container A is identified by the position of hole a of the egg. Specifically, by designating the number of a row and number of a column in temporary container A, a position of hole a is specified and egg E thereon is specified. Furthermore, in the present embodiment, as a plurality of temporary containers A are used, an information reading unit 18 reads the ID information of the temporary containers that identify each temporary container A, and in individual information storage unit 12 individual information of eggs on temporary container A is recorded in association with the ID information of the temporary container.

The individual information of eggs would include information obtained from a henhouse or information obtained from weight measurement device 21 or detection device 22 comprised by grading and packing apparatus 20. Examples of the information obtained from a henhouse include information of a henhouse in which an egg is collected, information of a date on which the egg is collected, information of a lot, information of feed, information of water, information of a state in which the collected egg is preserved, and the like. The information obtained from weight measurement device 21 includes egg weight information, or size information based on agricultural standards. Examples of the information obtained from detection device 22 include information in level of dirt of an egg, information in level of cracking of an egg, information in level in abnormality, such as blood, of an egg, and the like.

As shown in FIG. 1, information reading unit 18 includes an antenna and a reader/writer for reading data from RFID tag A1, and reads ID information of a temporary container from RFID tag A1.

Note that a control device (not shown) for controlling individual information determination system 1 for eggs according to the present embodiment is composed of a dedicated or general-purpose computer including a CPU, an internal memory, an input/output interface, an AD conversion unit and the like. By operating the CPU and other peripheral devices in accordance with a program stored in the internal memory, a function as the control device is exhibited. Further, the control device may be composed of a physically integral computer or may be composed of physically discrete computers.

Hereinafter will be described an example of a method of operating an egg grading and packing system including individual information determination system 1 for eggs according to the present embodiment.

Initially, from first transporting device 23 eggs E are transferred to weight measurement device 21, which in turn transmits information of the eggs in position and weight, which is in turn used for control for sorting the eggs in each grading and collecting unit 25 and is also used to manage individual information of the eggs in individual information storage unit 12. Information from each detection device 22 can also be managed as individual information for eggs, although it will not be described in detail.

Temporary container A is supplied from a temporary container supply unit 41 onto temporary container transporting unit 40, and has its holes a all filled with eggs E by one grading and collecting unit 25. Thereafter, temporary containers A laid one above another are stacked by stacking device 70 such that one container is rotated in the horizontal direction by 90 degrees relative to the other container, and are thus transported on temporary container transporting unit 40 toward automated storage 30.

On the way thereto, temporary container A being transported initially passes through orientation determination unit 11. While temporary container A is passing through orientation determination unit 11, whether temporary container A is oriented in a first pattern as shown in FIG. 3 or a second pattern as shown in FIG. 4 is determined, depending on which sensing unit 15 (15a or 15b) senses unit 14 provided only on one side of temporary container A to be sensed. More specifically, when unit to be sensed 14 is sensed by one sensing unit 15a (or it is not sensed by the other, upstream sensing unit 15b), it is determined that hole numbers match an order in which eggs are accommodated in holes a having the hole numbers, that is, temporary container A is oriented in the first pattern (or faces forward). In contrast, when unit to be sensed 14 is sensed by the other sensing unit 15b, it is determined that hole numbers are opposite to an order in which eggs are accommodated in holes a having the hole numbers, that is, temporary container A is oriented in the second pattern (or faces backward). For the first pattern, information of eggs in weight may be associated with hole numbers sequentially and thus stored to individual information storage unit 12, whereas for the second pattern, information of eggs in weight may be associated with an order opposite to the hole numbers and thus stored to individual information storage unit 12. In individual information storage unit 12, these pieces of information are managed in association with the ID information of a temporary container read by information reading unit 18.

Thereafter, temporary container A is transported downstream, and each temporary container A is stacked on another, loaded through the storage station into automated storage 30, and temporarily stored therein.

<Effect of First Embodiment>

Individual information determination system 1 for eggs according to the present embodiment comprises: orientation determination unit 11 that determines a position which temporary container A having a plurality of holes a with eggs E accommodated therein assumes as it is transported on temporary container transporting unit 40; and individual information storage unit 12 that manages individual information of eggs associated with holes a, respectively, based on the position of temporary container A transported that is determined by orientation determination unit 11. As such, eggs can be graded and packed without considering the orientation of temporary container A on temporary container transporting unit 40 in performing traceability for each egg E in hole a. Specifically, for example, it is unnecessary to set in temporary container supply unit 41 a large number of temporary containers A matched in orientation, and high working efficiency can be achieved. Furthermore, conventionally, eggs E are accommodated in different temporary containers A to correspond to a plurality of types of packing containers P, respectively, whereas the present system allows a plurality of types of eggs E to be mixed together and temporarily stored in a single temporary container A, and thus also allows an accommodation space to be used effectively.

Furthermore, based on ID information read at RFID tag A1 provided to temporary container A, the system inputs individual information of eggs corresponding thereto to individual information storage unit 12, and thus allows management for each temporary container A even when a large quantity of eggs are processed.

Furthermore, individual information determination system 1 for eggs has temporary container transporting unit 40 connected to automated storage 30 for temporarily storing temporary container A, and temporary container A is stacked above another identically shaped temporary container A such that it is rotated by 90 degrees in the horizontal direction and temporary containers A are thus stored in automated storage 30. Accordingly, one such as that of the present embodiment eliminates the necessity of finely setting a direction or the like in which temporary container A is rotated when it is stacked.

In the present embodiment, orientation determination unit 11 includes unit to be sensed 14 provided to temporary container A, and sensing unit 15 provided to temporary container transporting unit 40 to sense unit to be sensed 14 and orientation determination unit 11 allows detection while temporary container A is transported. In particular, one according to the present embodiment is capable of sensing contactlessly, and thus does not require stopping a transportation line and hence does not impair working efficiency. Furthermore, information reading unit 18 reads ID information from RFID tag A1 contactlessly, and it is needless to say that there is no need to stop the transportation line in this portion, either. Note that "stopping a transportation line" herein does not include a stopped portion in intermittent transportation, and it is a matter of course that temporary container transporting unit 40 may intermittently be transported.

Furthermore, sensing unit 15 is disposed on opposite sides with temporary container transporting unit 40 interposed, and, based on on which side of temporary container transporting unit 40 sensing unit 15 having sensed unit to be sensed 14 is, orientation determination unit 11 determines the position of the temporary container on temporary container transporting unit 40, and it suffices that each temporary container A has only one unit to be sensed 14. That is, temporary container A is also consumable, and it is cumbersome and also often costly to provide a large number of temporary containers A with a plurality of units to be sensed 14, respectively.

<Second Embodiment>

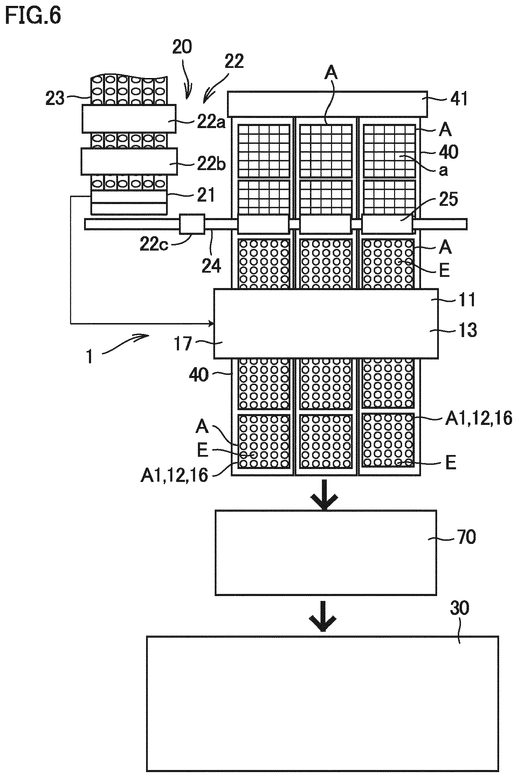

Hereinafter, a second embodiment of the present invention will be described using FIG. 6. Note that components identical or analogous to the first embodiment are identically denoted and will not be described redundantly unless necessary.

As shown in FIG. 6, individual information determination system 1 for eggs according to the present embodiment comprises: orientation determination unit 11 which determines a position which temporary container A having a plurality of holes a with eggs E accommodated therein assumes as it is transported on temporary container transporting unit 40; and individual information storage unit 12 which manages individual information of eggs associated with holes a, respectively, based on the position of temporary container A transported that is determined by orientation determination unit 11.

Orientation determination unit 11 includes a unit to be sensed 16 provided to temporary container A, and a sensing unit 17 provided to temporary container transporting unit 40 to sense unit to be sensed 16. In the present embodiment, unit to be sensed 16 is RFID tag A1 attached to one side surface of temporary container A. RFID tag A1, as well as that of the first embodiment, is an example of an information recording medium on which information for each egg E placed on hole a of temporary container A can be read and written, and allows contactless communication. In the present embodiment, RFID tag A1 is provided on one side surface of temporary container A, more specifically in a vicinity of a corner of temporary container A. Sensing unit 17 is an antenna which can read RFID tag A1 provided to temporary container A, for example. Sensing unit 17, as well as the proximity sensor described in the first embodiment, is disposed on opposite sides with temporary container transporting unit 40 interposed, and, based on on which side of temporary container transporting unit 40 sensing unit 17 having sensed unit to be sensed 16 is, orientation determination unit 11 of the present embodiment determines the position of the temporary container on temporary container transporting unit 40. Note that antenna 17 is in the form of a pair of antennas and connected to a reader/writer, and how antenna 17 in the form of the pair is disposed is not shown as it is disposed as sensing units 15a and 15b of the first embodiment are.

Individual information storage unit 12 is provided to RFID tag A1 provided to temporary container A and an information providing unit 13 is comprised that writes to RFID tag A1 provided to temporary container A individual information of eggs each associated with hole a.

As shown in FIG. 6, information providing unit 13 includes an antenna and a reader/writer for writing data to RFID tag A1, and records individual information of eggs to RFID tag A1. That is, in the present embodiment, RFID tag A1 serves as both unit to be sensed 16 and individual information storage unit 12 to be provided with information. The antenna serves as both sensing unit 17 and information providing unit 13.

As an example of a method of operating an egg grading and packing system including individual information determination system 1 for eggs according to the present embodiment, Initially, information of eggs in position and weight that is obtained from weight measurement device 21 of grading and packing apparatus 20 is transmitted, and used for control for sorting eggs E in each grading and collecting unit 25 and also used to manage individual information of the eggs in individual information storage unit 12. A basic operation up to automated storage 30 that is not described in the present embodiment follows the first embodiment.

While temporary container A is being transported on temporary container transporting unit 40 toward automated storage 30, the first embodiment is followed, i.e., when RFID tag A1 (or unit to be sensed 16) is sensed by one antenna (or sensing unit 17) (or it is not sensed by the other, upstream antenna (or sensing unit 17), it is determined that hole numbers match an order in which eggs are accommodated in holes a having the hole numbers, that is, temporary container A is oriented in the first pattern (or faces forward), and individual information of the eggs is written from the antenna (or information providing unit 13) to that RFID tag A1 (serving as individual information storage unit 12). In contrast, when RFID tag A1 (or unit to be sensed 16) is sensed by the other antenna (or sensing unit 17), it is determined that hole numbers are opposite to an order in which eggs are accommodated in holes a having the hole numbers, that is, temporary container A is oriented in the second pattern (or faces backward), and individual information of the eggs is written from the antenna (or information providing unit 13) to that RFID tag A1 (serving as individual information storage unit 12).

<Effect of Second Embodiment>

According to individual information determination system 1 for eggs according to the present embodiment, an effect identical or analogous to that of the first embodiment is obtained, and allowing individual information of eggs to be written directly to RFID tag A1 facilitates management for each temporary container A.

Furthermore, sensing unit 17 that is an antenna capable of reading RFID tag A1 provided to temporary container A allows a combination of RFID tag A1 and the antenna to be used for both sensing orientation and providing information and hence allows equipment to be compact. Furthermore, paired antennas 17 provided at rotationally symmetrical positions of temporary container A can prevent interference of radio waves between the antennas.

<Third Embodiment>

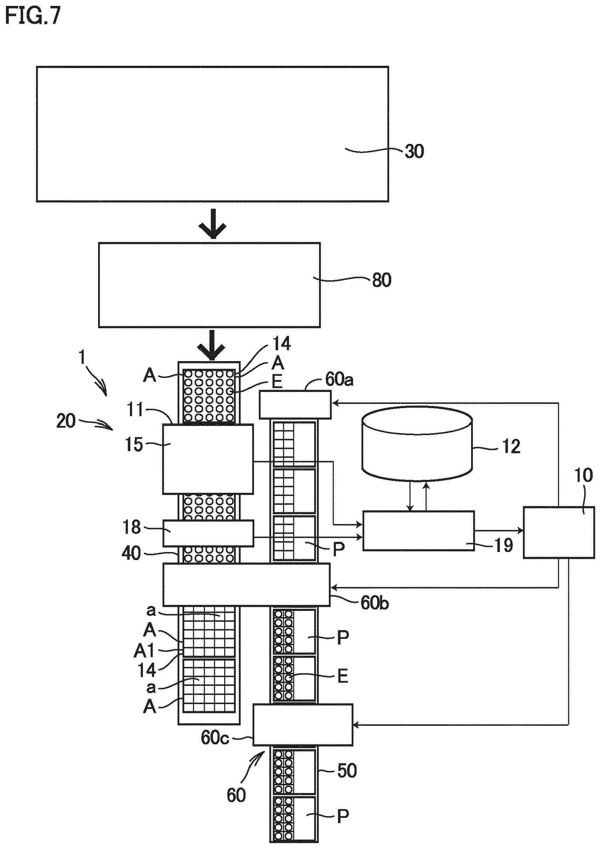

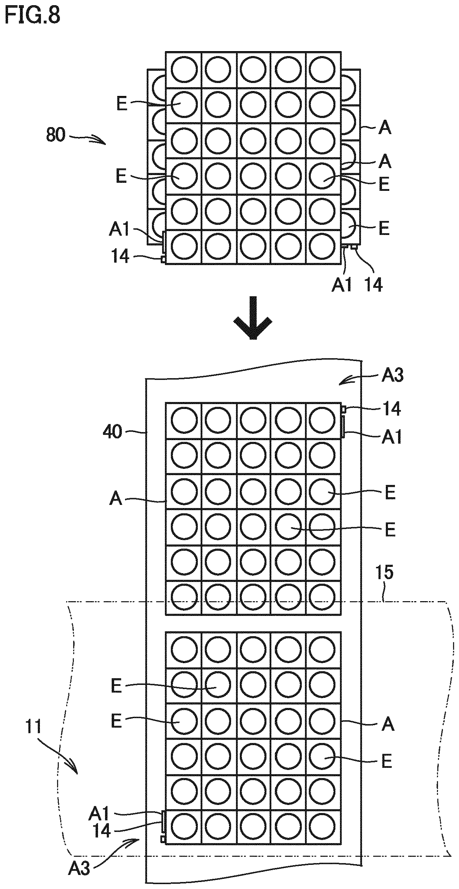

Hereinafter, a third embodiment of the present invention will be described using FIGS. 7 and 8. Note that components identical or analogous to the first embodiment are identically denoted and will not be described redundantly unless necessary.

As shown in FIG. 7, individual information determination system 1 for eggs according to the present embodiment is used when eggs E temporarily stored in automated storage 30 are packed in a predetermined packing container P in egg grading and packing apparatus 20 in a state in which eggs E are placed on temporary container A.

As shown in FIG. 7, packing container P is a container provided for distribution and every predetermined number thereof is collectively accommodated, and it is for example a lidded plastic pack or molded tray or the like.

As shown in FIG. 7, egg grading and packing apparatus 20 destacks temporary containers A that are output from automated storage 30 by a destacking device 80 one by one, and thereafter performs a variety of processes while transporting temporary containers A, as has conventionally been well known. Egg grading and packing apparatus 20 comprises temporary container transporting unit 40 for transporting temporary container A, a packing container transporting unit 50 provided parallel to temporary container transporting unit 40 and transporting a predetermined packing container P, and packing related equipment 60 provided to packing container transporting unit 50. Destacking device 80 can be a variety of types thereof well known in the field of art.

As shown in FIG. 7, packing related equipment 60 includes a container supply unit 60a which supplies predetermined packing container P to packing container transporting unit 50, a transfer unit 60b which transfers egg E from temporary container A to predetermined packing container P, and a label shooter unit 60c which introduces a label into predetermined packing container P. Container supply unit 60a, transfer unit 60b and label shooter unit 60c can be a variety of such units conventionally well known, and accordingly, will not be described in detail. For example, transfer unit 60b transfers egg E that is placed in temporary container A to predetermined packing container P, and mainly has a configuration similar to a conventionally existing re-packer device. Label shooter unit 60c may introduce a label into the side of the body of predetermined packing container P, as described in, for example, Japanese Patent Laying-open No. 2014-159303, or the side of the lid thereof.

As shown in FIG. 7, individual information determination system 1 for eggs according to the present embodiment comprises orientation determination unit 11 and individual information storage unit 12. Orientation determination unit 11 determines a position which temporary container A having a plurality of holes a with eggs E accommodated therein assumes as it is transported on temporary container transporting unit 40. Based on the position of temporary container A transported that is determined by orientation determination unit 11, individual information storage unit 12 manages individual information of eggs associated with holes a, respectively. Orientation determination unit 11 and individual information storage unit 12 follow the first embodiment. In the present embodiment, individual information storage unit 12 has previously stored therein at least individual information of eggs corresponding to holes a, respectively, associated with ID information of a temporary container. Individual information storage unit 12 of the present embodiment may be composed of a computer physically integrated with individual information storage unit 12 on the entry side of automated storage 30 or may be composed of a physically discrete computer.

Furthermore, individual information determination system 1 for eggs according to the present embodiment comprises information reading unit 18 which reads ID information in RFID tag A1 provided to temporary container A. Information reading unit 18 follows that indicated in the first embodiment.

Furthermore, as shown in Fig. 7, individual information determination system 1 for eggs according to the present embodiment comprises an information acquisition unit 19 which acquires, based on ID information read at RFID tag A1 provided to temporary container A, individual information of eggs corresponding thereto from individual information storage unit 12. Information acquisition unit 19 is for obtaining necessary information from individual information storage unit 12 based on the ID information of the temporary container.

Furthermore, individual information determination system 1 for eggs according to the present embodiment, as shown in Fig. 7, comprises a packing control device 10 which controls, based on individual information of eggs that is acquired by information acquisition unit 19, packing related equipment 60 provided at packing container transporting unit 50 transporting predetermined packing container P to which eggs E have been transferred from temporary container A. Specifically, packing control device 10 includes a control device which controls container supply unit 60a based on individual information of eggs, a control device which controls transfer unit 60b based on the individual information of the eggs, a control device which controls label shooter unit 60c based on the individual information of the eggs, and the like. Controlling container supply unit 60a includes, for example, changing packing container P supplied by container supply unit 60a. Controlling transfer unit 60b includes, for example, designating egg E that is not transferred by transfer unit 60b. Controlling label shooter unit 60c includes, for example, changing a label to be introduced by label shooter unit 60c, changing contents to be printed on a label according to individual information of eggs, and the like.

Hereinafter will be described an example of a method of operating an egg grading and packing system including individual information determination system 1 for eggs according to the present embodiment.

Initially, temporary containers A output from the retrieval station of automated storage 30 have cleared their state in which temporary containers A laid one above another have one temporary container A rotated from the other by 90 degrees in the horizontal direction, and are therewhile destacked by destacking device 80 one by one and aligned in longitudinal and lateral directions, and thereafter transported on temporary container transporting unit 40 toward packing related equipment 60.

As shown in FIG. 8, on that way, temporary container A being transported initially passes through orientation determination unit 11. While temporary container A is passing through orientation determination unit 11, whether temporary container A is oriented in the first pattern or the second pattern is determined, depending on which sensing unit 15 senses unit 14 provided only on one side of temporary container A to be sensed. More specifically, when unit to be sensed 14 is sensed by one sensing unit 15a (or it is not sensed by the other, upstream sensing unit 15b), it is determined that hole numbers match an order in which eggs are removed from holes a having the hole numbers, that is, temporary container A is oriented in the first pattern (or faces forward). In contrast, when unit to be sensed 14 is sensed by the other sensing unit 15b, it is determined that hole numbers are opposite to an order in which eggs are removed from holes a having the hole numbers, that is, temporary container A is oriented in the second pattern (or faces backward).

Subsequently, information reading unit 18 reads the ID information of the temporary container from RFID tag A1, and based on that information, individual information of eggs of interest is searched for and retrieved from individual information storage unit 12. For the first pattern, information of eggs in weight may be processed to be associated with hole numbers sequentially and thus outputtable from individual information storage unit 12, whereas for the second pattern, information of eggs in weight may be processed to be associated with an order opposite to the hole numbers and thus outputtable from individual information storage unit 12.

The present embodiment provides control performed based on individual information of eggs (e.g., egg weight information) acquired by information acquisition unit 19, as follows: More specifically, container supply unit 60a is controlled to supply packing container P of an appropriate size according to eggs' size. Alternatively, when a single temporary container A includes a portion at which eggs of different sizes or product types are switched, transfer unit 60b is controlled to transfer eggs to predetermined packing container P without mixing eggs of different sizes or product types. Furthermore, label shooter unit 60c is controlled to introduce a label to match eggs in size or quality or their brand. The above is an example of control, and is not exclusive.

<Effect of Third Embodiment>

According to individual information determination system 1 for eggs according to the present embodiment, an effect identical or analogous to that of the first embodiment is obtained, and individual information of eggs can be used to pack eggs E.

Furthermore, temporary container transporting unit 40 is connected to automated storage 30 for temporarily storing temporary container A, and temporary container A is stacked above another identically shaped temporary container A such that it is rotated by 90 degrees in the horizontal direction and temporary containers A are thus stored in automated storage 30. Although this entails an operation of destacking temporary containers A while rotating them, in doing so it is unnecessary to finely set a direction in which temporary container A is rotated and the like, and in the first place an orientation of temporary container A when it is introduced into automated storage 30 or an orientation of temporary container A when it is removed from automated storage 30, or the like can be set as desired and increased working efficiency can thus be achieved.

Furthermore, individual information determination system 1 for eggs according to the present embodiment comprises packing control device 10 which controls, based on individual information of eggs that is acquired by information acquisition unit 19, packing related equipment 60 provided at packing container transporting unit 50 transporting predetermined packing container P to which eggs E have been transferred from temporary container A. Conventionally, eggs E are accommodated in different temporary containers A to correspond to a plurality of types of packing containers P, respectively, whereas the present system allows a plurality of types of eggs E to be mixed together and temporarily stored in a single temporary container A, and hence allows an accommodation space to be used effectively.

<Fourth Embodiment>

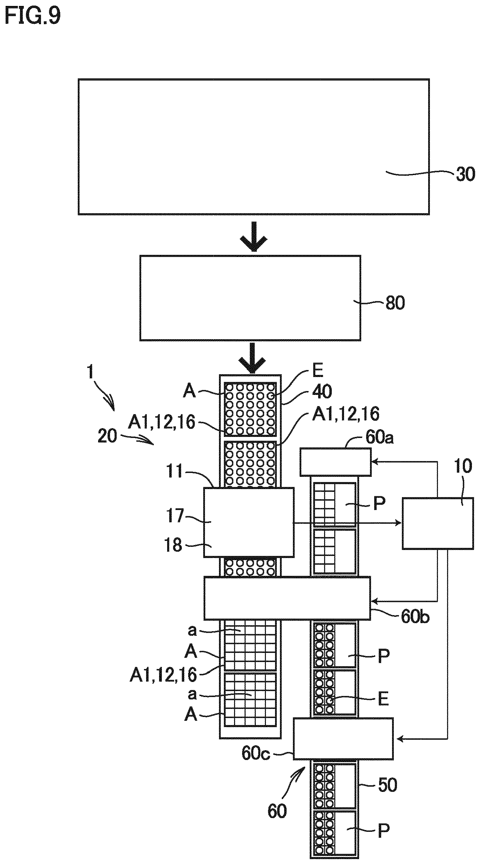

Hereinafter, a fourth embodiment of the present invention will be described using FIG. 9. Note that components identical or analogous to the first embodiment are identically denoted and will not be described redundantly unless necessary.

Individual information determination system 1 for eggs according to the present embodiment, as well as that indicated in the third embodiment, is used when eggs E temporarily stored in automated storage 30 are packed in predetermined packing container P in egg grading and packing apparatus 20 in a state in which eggs E are placed on temporary container A.

As shown in FIG. 9, individual information determination system 1 for eggs according to the present embodiment comprises orientation determination unit 11 and individual information storage unit 12. Orientation determination unit 11 determines a position which temporary container A having a plurality of holes a with eggs E accommodated therein assumes as it is transported on temporary container transporting unit 40. Based on the position of temporary container A transported that is determined by orientation determination unit 11, individual information storage unit 12 manages individual information of eggs associated with holes a, respectively.

Orientation determination unit 11 includes unit to be sensed 16 provided to temporary container A, and sensing unit 17 provided to temporary container transporting unit 40 to sense unit to be sensed 16. In the present embodiment, unit to be sensed 16 is RFID tag A1 attached to one side surface of temporary container A, and sensing unit 17 is an antenna which can read RFID tag A1 provided to temporary container A, for example. In other words, unit to be sensed 16 and sensing unit 17 of the present embodiment follow those of the second embodiment, and accordingly, will not be described repeatedly in detail.

Individual information storage unit 12 is provided to RFID tag A1 provided to temporary container A and information reading unit 18 is comprised that reads from the RFID tag individual information of eggs each associated with hole a. Information reading unit 18 includes an antenna and a reader/writer for reading data from RFID tag A1, and reads individual information of eggs from RFID tag A1. That is, in the present embodiment, RFID tag A1 serves as both unit to be sensed 16 and individual information storage unit 12 to have information read therefrom. The antenna serves as both sensing unit 17 and information reading unit 18.

Furthermore, individual information determination system 1 for eggs according to the present embodiment comprises packing control device 10 which controls, based on individual information of eggs that is acquired by information acquisition unit 19, packing related equipment 60 provided at packing container transporting unit 50 transporting predetermined packing container P to which eggs E have been transferred from temporary container A. Packing related equipment 60 and packing control device 10 follow those of the third embodiment, and accordingly, will not be described repeatedly in detail.

As an example of a method of operating an egg grading and packing system including individual information determination system 1 for eggs according to the present embodiment, initially, stacked temporary containers A output from the retrieval station of automated storage 30 are destacked one by one and aligned in longitudinal and lateral directions, and thereafter transported on temporary container transporting unit 40 toward packing related equipment 60. A basic operation from automated storage 30 that is not described in the present embodiment follows the third embodiment.

While temporary container A is being transported on temporary container transporting unit 40 toward packing related equipment 60, the third embodiment is followed, i.e., when RFID tag A1 (or unit to be sensed 16) is sensed by one antenna (or sensing unit 17) (or it is not sensed by the other, upstream antenna (or sensing unit 17), it is determined that hole numbers match an order in which eggs are accommodated in holes a having the hole numbers, that is, temporary container A is oriented in the first pattern (or faces forward), and individual information of the eggs is received from that RFID tag A1 (serving as individual information storage unit 12) by the antenna (or information reading unit 18). In contrast, when RFID tag A1 (or unit to be sensed 16) is sensed by the other antenna (or sensing unit 17), it is determined that hole numbers are opposite to an order in which eggs are accommodated in holes a having the hole numbers, that is, temporary container A is oriented in the second pattern (or faces backward), and individual information of the eggs is received from that RFID tag A1 (serving as individual information storage unit 12) by the antenna (or information reading unit 18).

Then, based on the individual information of the eggs (e.g., egg weight information) read from RFID tag A1 by information reading unit 18, in the present embodiment, at least one of container supply unit 60a, transfer unit 60b, and label shooter unit 60c is controlled. This follows the third embodiment, and accordingly will not be described repeatedly in detail.

<Effect of Fourth Embodiment>

According to individual information determination system 1 for eggs according to the present embodiment, an effect identical or analogous to that of the first embodiment is obtained, and allowing individual information of eggs to be read directly from RFID tag A1 facilitates management for each temporary container A.

Furthermore, as well as in the second embodiment, sensing unit 17 that is an antenna capable of reading RFID tag A1 provided to temporary container A allows a combination of RFID tag A1 and the antenna to be used for both sensing orientation and reading information and also allows equipment to be compact. Furthermore, paired antennas 17 provided to rotationally symmetrical positions of temporary container A can prevent interference of radio waves between the antennas.

<Fifth Embodiment>

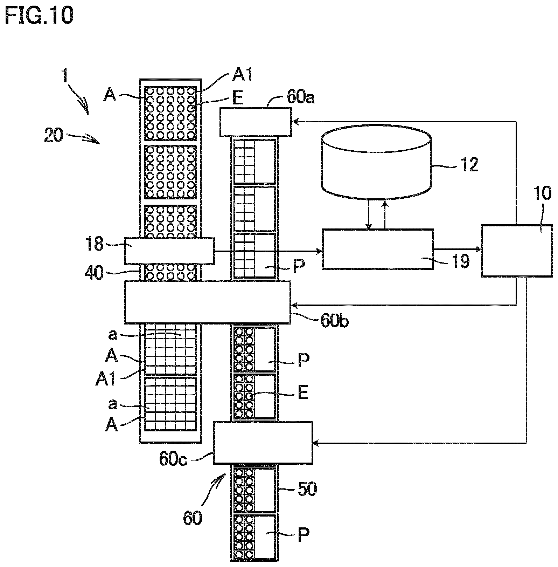

Hereinafter, a fifth embodiment of the present invention will be described using FIG. 10. Note that components identical or analogous to the first embodiment are identically denoted and will not be described redundantly unless necessary.

As shown in FIG. 10, individual information determination system 1 for eggs according to the present embodiment is used when eggs are packed in predetermined packing container P in egg grading and packing apparatus 20 in a state in which the eggs are placed on temporary container A. Egg grading and packing apparatus 20 is a conventionally well-known apparatus performing a variety of processes while transporting eggs E, and comprises temporary container transporting unit 40 which transports temporary container A, packing container transporting unit 50 provided parallel to temporary container transporting unit 40 and transporting predetermined packing container P, and packing related equipment 60 provided to packing container transporting unit 50.

As shown in FIG. 10, individual information determination system 1 for eggs according to the present embodiment comprises individual information storage unit 12, information acquisition unit 19 and packing control device 10. Individual information storage unit 12 manages individual information of eggs associated with a plurality of holes a, respectively, provided to temporary container A to accommodate eggs E therein. Information acquisition unit 19 acquires, based on ID information read at RFID tag A1 provided to temporary container A, individual information of eggs corresponding thereto from individual information storage unit 12. Packing control device 10 controls, based on individual information of eggs that is acquired by information acquisition unit 19, packing related equipment 60 provided at packing container transporting unit 50 transporting predetermined packing container P to which eggs E have been transferred from temporary container A. Note that individual information determination system 1 for eggs according to the present embodiment excludes orientation determination unit 11 that determines a position of temporary container A on temporary container transporting unit 40, and in this regard the system is different from those of the first to fourth embodiment, however, the remainder is similar to each configuration indicated in the third embodiment.

As an example of a method of operating an egg grading and packing system including individual information determination system 1 for eggs according to the present embodiment, initially, temporary containers A are transported one by one on temporary container transporting unit 40 toward packing related equipment 60.

On this way, information reading unit 18 reads the ID information of the temporary container from RFID tag A1, and based on that information, individual information of eggs of interest is searched for by information acquisition unit 19 and retrieved from individual information storage unit 12. Then, based on the individual information of the eggs (e.g., egg weight information) obtained at information acquisition unit 19, at least one of container supply unit 60a, transfer unit 60b, and label shooter unit 60c is controlled. This follows the third embodiment, and accordingly will not be described repeatedly in detail.

<Effect of Fifth Embodiment>

According to individual information determination system 1 for eggs according to the present embodiment, using information for egg E of each hole a in packing the egg in packing container P can suppress reduction in production efficiency even for production for multiple product types in small amounts. While conventionally, one temporary container contains eggs of the same product type and the same size, that is, rough management has been performed, subdivided individual information of eggs is now required in order to meet a demand for producing multiple types of eggs in small amounts. In implementing this, if temporary containers are divided for different product types or different sizes, it is expected that the temporary containers may not have their holes all filled with eggs and accordingly, such temporary containers are piled up, resulting in poor production efficiency.

According to the present embodiment, even when a single temporary container A includes a portion at which eggs of different sizes or product types are switched, packing related equipment 60 can be controlled to prevent the eggs of different sizes or product types from being mixed together. In particular, since contactless sensing can be done, it is unnecessary to stop the transportation line, and impaired working efficiency can be prevented.

<Sixth Embodiment>

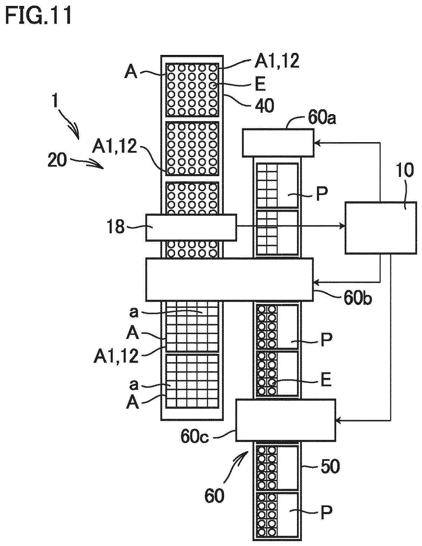

Hereinafter, a sixth embodiment of the present invention will be described using FIG. 11. Note that components identical or analogous to the first embodiment are identically denoted and will not be described redundantly unless necessary.

As shown in FIG. 11, individual information determination system 1 for eggs according to the present embodiment is used when eggs are packed in predetermined packing container P in egg grading and packing apparatus 20 in a state in which the eggs are placed on temporary container A. Egg grading and packing apparatus 20 is a conventionally well-known apparatus performing a variety of processes while transporting eggs E, and comprises temporary container transporting unit 40 which transports temporary container A, packing container transporting unit 50 provided parallel to temporary container transporting unit 40 and transporting predetermined packing container P, and packing related equipment 60 provided to packing container transporting unit 50.

As shown in FIG. 11, individual information determination system 1 for eggs according to the present embodiment comprises information reading unit 18 and packing control device 10. Information reading unit 18 reads from RFID tag A1 provided to temporary container A individual information of eggs associated with a plurality of holes a, respectively, provided to temporary container A to accommodate eggs E therein. Packing control device 10 controls, based on individual information of eggs that is read by information reading unit 18, packing related equipment 60 provided at packing container transporting unit 50 transporting predetermined packing container P to which eggs E have been transferred from temporary container A. Note that individual information determination system 1 for eggs according to the present embodiment excludes orientation determination unit 11 that determines a position of temporary container A on temporary container transporting unit 40, and in this regard the system is different from those of the first to fourth embodiment, however, the remainder follows each configuration indicated in the fourth embodiment.

As an example of a method of operating an egg grading and packing system including individual information determination system 1 for eggs according to the present embodiment, initially, temporary containers A are transported one by one on temporary container transporting unit 40 toward packing related equipment 60.

On this way, based on the individual information of eggs (e.g., egg weight information) read from RFID tag A1 by information reading unit 18, at least one of container supply unit 60a, transfer unit 60b, and label shooter unit 60c is controlled. This follows the third embodiment, and accordingly will not be described repeatedly in detail.

<Effect of Sixth Embodiment>

According to individual information determination system 1 for eggs according to the present embodiment, an effect identical or analogous to that of the fifth embodiment is obtained, and allowing individual information of eggs to be read directly from RFID tag A1 facilitates management for each temporary container A.

<Seventh Embodiment (content leak-out detection apparatus)>

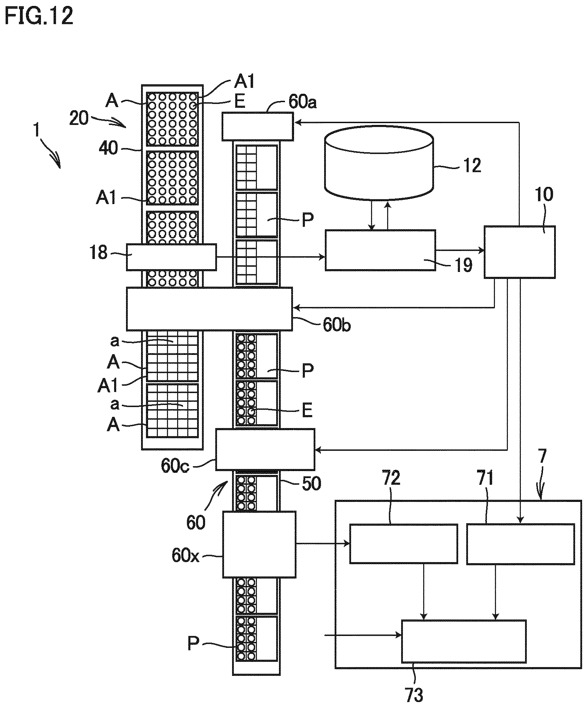

Hereinafter, a seventh embodiment of the present invention will be described using FIG. 12. Note that components identical or analogous to the first embodiment are identically denoted and will not be described redundantly unless necessary.

The present embodiment relates to an egg content leak-out detection apparatus 7 which employs individual information determination system 1 for eggs according to the first to sixth embodiments to detect whether egg E accommodated in packing container P has its contents having leaked out thereof.

As shown in FIG. 12, content leak-out detection apparatus 7 according to the present embodiment includes a weight-at-grading-time data receiving unit 71, a post-packing weight data receiving unit 72, and a content leak-out determination unit 73. Weight-at-grading-time data receiving unit 71 receives from packing control device 10 data on weight at a time of grading that extracts weights of eggs accommodated in a specific packing container P, based on individual information of eggs obtained at information acquisition unit 19. Post-packing weight data receiving unit 72 receives from a weight measuring unit 60x provided to packing container transporting unit 50 data on a post-packing weight measured in a state in which eggs E are accommodated in specific packing container P. Content leak-out determination unit 73 determines whether there is any egg E accommodated having its contents having leaked out thereof by using a weight in a packed state obtained from data on a post-packing weight, a weight at a time of grading obtained from data on the weight at the time of grading, and a weight of specific packing container P in an empty state.

Weight-at-grading-time data receiving unit 71 receives from packing control device 10 data on weight at a time of grading, e.g., data for 10 eggs accommodated in specific packing container P. Packing control device 10 is similar to that indicated in the third embodiment and in the present embodiment it controls egg content leak-out detection apparatus 7 based on individual information of eggs acquired by information acquisition unit 19.

Post-packing weight data receiving unit 72 receives data on post-packing weight from weight measuring unit 60x, and for example receives a total value of the weight of specific packing container P per se and data of 10 eggs currently accommodated in specific packing container P. Weight measuring unit 60x provided to packing container transporting unit 50 can be a variety of conventionally well known weight measuring instruments that can measure weight in a packed state.

Content leak-out determination unit 73 determines content leak-out by using a weight (X) in a packed state, a weight (Y) at a time of grading, and a packing container's weight (Z). The weight (X) in the packed state is obtained from data on a post-packing weight measured by weight measuring unit 60x and received by post-packing weight data receiving unit 72. The weight (Y) at the time of grading is obtained from data received by weight-at-grading-time data receiving unit 71 on a weight at the time of grading. A packing container's weight (Z) is a weight of specific packing container P in an empty state, and in the present embodiment a human operator previously inputs a numerical value in accordance with specific packing container P.

Note that a control device (not shown) for controlling content leak-out detection apparatus 7 according to the present embodiment is composed of a dedicated or general-purpose computer including a CPU, an internal memory, an input/output interface, an AD conversion unit and the like. By operating the CPU and other peripheral devices in accordance with a program stored in the internal memory, a function as the control device is exhibited. Further, the control device may be composed of a physically integral computer or may be composed of physically discrete computers.

More specifically, in the present embodiment, content leak-out determination unit 73 for example calculates

$$X - (Y + Z) \quad ... \quad (\text{expression 1}),$$

and compares the value of expression 1 with a predetermined threshold value. When expression 1 has a value smaller than the predetermined threshold value, it is determined that there is an egg with its contents having leaked out thereof. When expression 1 has a value equal to or greater than the predetermined threshold value, it is determined that there is no egg with its contents having leaked out thereof.

That is, the weight of each egg E at a time of grading plus the weight of packing container P per se should normally be equal to the weight of the egg in the packed state. However, in a case where for some reason an egg has its eggshell broken and thus having a hole and while the egg is graded it has its contents within the eggshell, however, at a stage of temporary storage or the like, the egg has its contents having leaked outside the eggshell, an actual weight would be smaller than an expected weight. Egg content leak-out detection apparatus 7 of the present embodiment focuses on this phenomenon.

<Effect of Seventh Embodiment (content leak-out detection apparatus)>

According to the present embodiment, content leak-out detection apparatus 7 employs individual information determination system 1 for eggs as described above to detect whether egg E accommodated in packing container P has its contents having leaked out thereof, and content leak-out detection apparatus 7 includes weight-at-grading-time data receiving unit 71, post-packing weight data receiving unit 72, and content leak-out determination unit 73. Weight-at-grading-time data receiving unit 71 receives from packing control device 10 data on weight at a time of grading that extracts weights of eggs accommodated in specific packing container P, based on individual information of eggs obtained at information acquisition unit 19. Post-packing weight data receiving unit 72 receives from weight measuring unit 60x provided to packing container transporting unit 50 data on a post-packing weight measured in a state in which eggs E are accommodated in specific packing container P. Content leak-out determination unit 73 determines whether there is any egg E accommodated having its contents having leaked out thereof by using a weight in a packed state obtained from data on a post-packing weight, a weight at a time of grading obtained from data on the weight at the time of grading, and a weight of specific packing container P in an empty state.

This can help detecting a content lost egg which is an easy target of complaints and results from a crack of a lower portion of egg E which is not easily visually confirmed in a packed state. Conventionally, only a management by size with a temporary container serving as a unit is performed, and furthermore, eggs included in one size actually have their weights across a wide range, and it has thus been difficult to use packed eggs' weights to detect whether there is an egg with its contents having leaked out thereof. However, by tracing individual egg weights as in the present embodiment, at least one of a state in which after eggs E are packed, packing container P has some hole a without egg E accommodated therein, i.e., a state with a missing egg, and a state in which packing container P has some hole a with egg E accommodated therein without contents, can be detected. Note that egg E without contents means an egg which has an eggshell broken and thus having a hole and thus has its contents partially or entirely having leaked outside.

In addition, a part which has required human visual confirmation can be automated, which contributes to saved personnel costs. Furthermore, one such as that of the present embodiment allows continuous detection and is also advantageous in that it does not impair working efficiency.

Note that the present invention is not limited to the above-described embodiments.

<RFID tag → bar code>

The RFID tag provided to the temporary container may be replaced with a barcode including ID information. In that case, a barcode reader may be used as the information reading unit. The barcode may be either a well-known one-dimensional barcode or a two-dimensional barcode (a symbol).

Further, the RFID tag may be attached to the temporary container or may be embedded in the temporary container. Further, the RFID tag or barcode can be changed variously in where it is positioned, what size it has, and how many RFID tags/barcodes are used. For example, the RFID tag may be provided at a location (e.g., a corner) accessible in a plurality of directions of four side surfaces of the temporary container. This allows the temporary container to be used not only such that it faces forward or backward as has been described in the first to fourth embodiments but also such that it is transported in a state in which it is rotated by 90 degrees in the horizontal direction.

Further, where the information providing unit or the information reading unit is positioned, what size the unit has and how many such units are used can also be changed variously to correspond to where the RFID tag or barcode is positioned, what size it has, and how many RFID tags/barcodes are used. For example, the information providing unit or the information reading unit is not limited to those disposed oppositely, and may be that disposed only at one location or those disposed at all of the corners of the temporary container (at four locations).

<Orientation determination unit → tray's shape + camera>

The orientation determination unit may be any type that can determine a position which a temporary container having a plurality of holes with eggs accommodated therein assumes as it is transported on a temporary container transporting unit, and it may for example be composed of a unique portion (in shape, color, etc.) provided to the temporary container and an imaging unit capable of detecting the unique portion.

Furthermore, the sensing unit of the orientation determination unit may contactlessly sense the unit to be sensed or may sense it by contacting it.

The unit to be sensed may be attached to the temporary container or may be embedded in the temporary container. Further, the unit to be sensed can also be changed variously in where it is positioned, what size it has, and how many such units are used. For example, it may be provided at a location (e.g., a corner) accessible in a plurality of directions of four side surfaces of the temporary container. This allows the temporary container to be used not only such that it faces forward or backward as has been described in the first to fourth embodiments but also such that it is transported in a state in which it is rotated by 90 degrees in the horizontal direction.

Further, where the sensing unit is positioned, what size the unit has and how many such units are used can also be changed variously to correspond to where the unit to be sensed is positioned, what size it has, and how many such units are used. For example, the sensing unit is not limited to those disposed oppositely, and may be that disposed only at one location or those disposed at all of the corners of the temporary container (at four locations).

A main example of the orientation determination unit includes three patterns:

(a-1) metal piece + proximity sensor system (first or third embodiment);
(a-2) RFID tag + antenna system (second or fourth embodiment); and
(a-3) visually unique portion + imaging unit system (exemplary variation).

Furthermore, a main example of the individual information storage unit includes two patterns:

(b-1) the individual information storage unit is included in the RFID (second or fourth embodiment); and

(b-2) the individual information storage unit is included in a database other than the RFID (first or third embodiment).

These (a-1) to (a-3) and (b-1) or (b-2) can be combined with one another as desired other than in the above embodiments. Further, the content leak-out detection apparatus can be applied to any of the combinations.

The packing related equipment may be any equipment or mechanism that is related in packing eggs in a predetermined packing container, and other than the above described container supply, transfer and label shooter units, the packing related equipment may be other packing related equipment represented for example by a product information providing unit which provides a predetermined packing container with individual information of eggs transferred to the predetermined packing container or information associated therewith, a labeler unit which sticks a label to an external side of the predetermined packing container, and a label sealer unit which sticks a seal to individual eggs in the predetermined packing container, and it is not a requirement to comprise all of these.

The product information providing unit follows the information providing unit of the second embodiment. Furthermore, it may be such that according to the first embodiment a predetermined packing container has ID information in advance and individual information of eggs etc. may be managed on another database. The labeler unit is implemented in accordance with the label shooter unit indicated in the third embodiment etc. The label sealer unit sticks a so-called "individual seal," which is a label on which an expiry date or the like is printed, to an upper end portion of an egg in a state in which it is in a predetermined packing container, and printing contents can be controlled such as changed depending on individual information of eggs. Further, the packing control device that controls the packing related equipment may control the packing related equipment based on the ID information of a temporary container read by the information reading unit.

While the egg content leak-out detection apparatus is such that the weight-at-grading-time data receiving unit receives data from the packing control unit based on individual information of eggs obtained by the information acquiring unit, as has been described in the seventh embodiment, it may alternatively be such that the weight-at-grading-time data receiving unit receives data from the packing control unit based on individual information of eggs obtained by the information reading unit. Further, a specific, empty packing container's weight may be measured by a weight measuring instrument as occasion requires, and received by a unit which receives data of the weight of the empty packing container.

Furthermore, a determination method in the content leak-out determination unit is not limited to the above described method, and for example,

$$(X - Z) - Y \quad ... \quad (\text{expression } 2)$$

may be calculated and the value of expression 2 may be compared with a predetermined threshold value. When expression 2 has a value smaller than the predetermined threshold value, it is determined that there is an egg with its contents having leaked out thereof. When expression 2 has a value equal to or greater than the predetermined threshold value, it is determined that there is no egg with its contents having leaked out thereof.

Furthermore, the egg content leak-out detection apparatus of the present invention can detect not only an egg having its contents all outside the eggshell but also an egg having its contents partially remaining inside the eggshell. Furthermore, this content leak-out detection apparatus can also detect a state in which a packing container has some hole without an egg thereon, i.e., a state with a missing egg.

The egg grading and packing apparatus or system is not limited to that shown and can be changed variously. In addition, from a henhouse to the egg grading and packing apparatus, a so-called in-line type (i.e., the egg grading and packing apparatus is connected directly to the henhouse) or a so-called off-line type (i.e., the egg grading and packing apparatus is away from the henhouse) may be applied. Furthermore, the individual information determination system for eggs according to the present invention may be used before eggs are graded. Specifically, it can be applied to an apparatus which successively packs eggs that are collected from a henhouse in a temporary container, i.e., a so-called farm packer.

While as individual information of an egg, in the above-described embodiments, egg weight information obtained from a weight measurement device is used, it may alternatively or additionally be information obtained from a henhouse and information obtained from a variety of types of detection devices.

ID information of a temporary container may be unique to an RFID tag or a barcode as described above or may be set for each temporary container separately. In the latter case, for example, the information providing unit may be provided downstream of the orientation determination unit, and the information providing unit may write the ID information of the temporary container to the RFID tag or attach a barcode provided with the ID information of the temporary container at the information providing unit.

While the temporary storage unit is an automated warehouse, it may alternatively be a planar temporary storage site or a transportation means such as a truck. Note that when compared with these, temporary storage may be done for a shorter period of time or the egg grading and packing apparatus may have an upstream side and a downstream with a shorter distance therebetween so that stacking or destacking temporary containers may not be involved. That is, the grading and packing apparatus according to the first or second embodiment may be physically connected to the grading and packing apparatus according to any one of the third to seventh embodiments. Furthermore, the fifth to seventh embodiments may be such that the temporary container transporting unit has an upstream side connected to the temporary storage unit or the destacking device.

The temporary container is not limited to that of the size shown, and can be changed variously. In addition, temporary containers can be stacked and destacked in a variety of well-known methods. The packing container can also be implemented by a variety of well-known packing containers.

The temporary container transporting unit and the packing container transporting unit may be composed of a plurality of conveyers. Furthermore, the temporary container transporting unit may be connected to the temporary storage unit directly or indirectly via another transporting unit.

Although the present invention has been described and illustrated in detail, it is clearly understood that the same is by way of illustration and example only and is not to be taken by way of limitation, the scope of the present invention being interpreted by the terms of the appended claims.

**Claims**

1. An individual information determination system for eggs, comprising:

   an orientation determination unit (11) which determines a position which a temporary container (A) having a plurality of holes (a) with eggs (E) accommodated therein assumes as it is transported on a temporary container transporting unit (40); and
   an individual information storage unit (12) which manages individual information of eggs (E) associated with the holes (a), respectively, based on the position of the temporary container (A) transported that is determined by the orientation determination unit (11).

2. The individual information determination system for eggs according to claim 1, wherein further comprising an information acquisition unit (19) which acquires, based on ID information read at any one of an RFID tag (A1) and a bar code provided to the temporary container (A), individual information of eggs (E) corresponding thereto from the individual information storage unit (12).

3. The individual information determination system for eggs according to claim 1, the individual information storage unit (12) being included in an RFID tag (A1) provided to the temporary container (A), further comprising one of: an information providing unit (13) that writes to the RFID tag (A1) provided to the temporary container (A) the individual information of the eggs (E) associated with the holes (a), respectively; and an information reading unit (18) that reads the individual information of the eggs (E) from the RFID tag (A1).

4. The individual information determination system for eggs according to claim 1, wherein
the temporary container transporting unit (40) is connected to a temporary storage unit (30) for temporarily storing the temporary container (A), and
the temporary container (A) is stacked above another identically shaped temporary container (A) such that it is rotated by 90 degrees in a horizontal direction and the temporary containers (A) are thus stored in the temporary storage unit (30).

5. The individual information determination system for eggs according to claim 1, wherein the orientation determination unit (11) includes a unit to be sensed (14, 16) provided to the temporary container (A), and a sensing unit (15, 17) provided to the temporary container transporting unit (40) to sense the unit to be sensed (14, 16).

6. The individual information determination system for eggs according to claim 5, wherein
the sensing unit (15, 17) is disposed on opposite sides with the temporary container transporting unit (40) interposed, and
based on on which side of the temporary container transporting unit (40) the sensing unit (15, 17) having sensed the unit to be sensed (14, 16) is, the orientation determination unit (11) determines the position of the temporary container on the temporary container transporting unit (40).

7. The individual information determination system for eggs according to claim 5, wherein the sensing unit (15, 17) is an antenna.

8. The individual information determination system for eggs according to claim 1, further comprising a packing control device (10) which controls, based on the individual information of the eggs (E), packing related equipment (60) provided at a packing container transporting unit (50) transporting a predetermined packing container (P) to which eggs (E) have been transferred from the temporary container (A).

9. The individual information determination system for eggs according to claim 8, wherein the packing related equipment (60) is at least one of:

a container supply unit (60a) which supplies the predetermined packing container (P) to the packing container transporting unit (50);
a transfer unit (60b) which transfers eggs (E) from the temporary container (A) to the predetermined packing container (P);
a product information providing unit (13) which provides the packing container (P) with any of individual information of the eggs (E) transferred to the predetermined packing container (P) and information associated therewith;
a label shooter unit (60c) which introduces a label into the predetermined packing container (P);
a labeler unit which sticks a label to an external side of the predetermined packing container (P); and
a label sealer unit which sticks a seal to individual eggs (E) in the predetermined packing container (P).

10. An individual information determination system for eggs, comprising:

an individual information storage unit (12) which manages individual information of eggs (E) associated with a plurality holes (a), respectively, provided to a temporary container (A) to accommodate eggs (E) therein;
an information acquisition unit (19) which acquires, based on ID information read at any one of an RFID tag (A1) and a bar code provided to the temporary container (A), individual information of eggs (E) corresponding thereto from the individual information storage unit (12); and
a packing control device (10) which controls, based on the individual information of the eggs (E) obtained at the information acquisition unit (19), packing related equipment (60) provided at a packing container transporting unit (50) transporting a predetermined packing container (P) to which eggs (E) have been transferred from the temporary container (A).

11. An individual information determination system for eggs, comprising:

an information reading unit (18) which reads from an RFID tag (A1) provided to a temporary container (A) individual information of eggs (E) associated with a plurality of holes (a), respectively, provided to the temporary container (A) to accommodate eggs (E) therein; and
a packing control device (10) which controls, based on the individual information of the eggs (E) read by the information reading unit (18), packing related equipment (60) provided at a packing container transporting unit (50) transporting a predetermined packing container (P) to which eggs (E) have been transferred from the temporary container (A).

**12.** An egg content leak-out detection apparatus (7) which employs an individual information determination system for eggs (E) according to any one of claims 8 to 11 to detect whether there is any egg (E) accommodated in a packing container (P) that has its contents having leaked out thereof, comprising:

a weight-at-grading-time data receiving unit (71) which receives from the packing control device (10) data on weight at a time of grading that extracts weights of eggs (E) accommodated in a specific packing container (P), based on individual information of the eggs (E);

a post-packing weight data receiving unit (72) which receives from a weight measuring unit (60x) provided to a packing container transporting unit (50) data on a post-packing weight measured in a state in which eggs (E) are accommodated in the specific packing container (P); and

a content leak-out determination unit (73) which determines whether there is any egg (E) accommodated with its contents having leaked out thereof by using a weight in a packed state obtained from the data on the post-packing weight, a weight at a time of grading obtained from the data on the weight at the time of grading, and a weight of the specific packing container (P) in an empty state.

FIG.1

FIG.2

FIG.3

DETERMINED
TO FACE FORWARD

| TRAY No. XXXXX | | |
|---|---|---|
| HOLE No. | ACCOMMODATING ORDER / REMOVING ORDER | EGG WEIGHT |
| 1 | 1 | 59.2 |
| 2 | 2 | 62.3 |
| 3 | 3 | 58.5 |
| … | … | … |
| 28 | 28 | 61.0 |
| 29 | 29 | 60.7 |
| 30 | 30 | 59.7 |

# FIG.4

| TRAY No. XXXXX | | |
|---|---|---|
| HOLE No. | ACCOMMODATING ORDER / REMOVING ORDER | EGG WEIGHT |
| 1 | 30 | 59. 2 |
| 2 | 29 | 62. 3 |
| 3 | 28 | 58. 5 |
| ... | ... | ... |
| 28 | 3 | 61. 0 |
| 29 | 2 | 60. 7 |
| 30 | 1 | 59. 7 |

DETERMINED TO FACE BACKWARD

FIG.5

FIG.6

FIG.7

FIG.8

FIG.9

FIG.10

FIG.11

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004344040 A
- JP 4431828 B
- JP 5899533 B
- JP 5896840 B
- JP 2014159303 A